# EUROPÄISCHE PATENTANMELDUNG

(11) **EP 3 964 770 A1**
(43) Veröffentlichungstag der Anmeldung: **09.03.2022**
(21) Anmeldenummer: 20195060.7
(22) Anmeldetag: 08.09.2020
(51) Int. Cl.: F25B 15/04, F25B 11/00

(54) **SORPTIONSWÄRMEPUMPE UND SORPTIONSKREISPROZESS**

(71) Anmelder: AGO GmbH Energie + Anlagen, 95326 Kulmbach (DE)
(72) Erfinder: Ramming, Klaus, 95336 Mainleus (DE)
(74) Vertreter: Bauer, Dirk

(57) **Zusammenfassung**

Offenbart ist zunächst eine Sorptionswärmepumpe mit gasförmigem Kältemittel und flüssigem Lösungsmittel, einer armen und einer reichen Lösung, wobei die arme und die reiche Lösung einphasige Mischungen des Lösungsmittels und des Kältemittels sind, sowie mit einer Absorptionseinheit (2), in der die arme Lösung das Kältemittel absorbiert und dabei Wärme abgibt und einem Austreiber, in dem die reiche Lösung von außen zugeführte Wärme aufnimmt und dabei das Kältemittel austreibt. Offenbart ist weiterhin ein Sorptionskreisprozess einer solchen Sorptionswärmepumpe.

Um die Temperaturspreizung des in die Absorptionseinheit (2) ein- und aus dieser ausströmenden Wärmeträgers zu erhöhen wird vorgeschlagen, einen ersten Absorber (13), einen Druckminderer (15) und einen zweiten Absorber (16) in der Absorptionseinheit (2) vorzusehen, wobei die arme Lösung in dem ersten Absorber (13) auf einem ersten Druckniveau einen ersten Teilstrom des Kältemittels absorbiert, der Druckminderer (15) einen zweiten Teilstrom des Kältemittels auf ein zweites Druckniveau drosselt und die aus dem ersten Absorber (13) ausströmende arme Lösung anschließend in dem zweiten Absorber (16) den zweiten Teilstrom absorbiert.

## Beschreibung

Die Erfindung betrifft zunächst eine Sorptionswärmepumpe mit gasförmigem Kältemittel und flüssigem Lösungsmittel, einer armen und einer reichen Lösung, wobei die arme und die reiche Lösung einphasige Mischungen des Lösungsmittels und des Kältemittels sind, sowie mit einer Absorptionseinheit, in der die arme Lösung das Kältemittel absorbiert und dabei Wärme abgibt und einem Austreiber, in dem die reiche Lösung von außen zugeführte Wärme aufnimmt und dabei das Kältemittel austreibt. Die Erfindung betrifft weiterhin einen Sorptionskreisprozess einer solchen Sorptionswärmepumpe.

Derartige Wärmepumpen mit Lösungskreislauf haben insbesondere dann thermodynamische Vorteile gegenüber üblichen Wärmepumpen, wenn sie auf der Wärmequellen- oder -senkenseite eine hohe Temperaturspreizung zwischen dem jeweils ein- und dem ausströmenden Wärmeträger aufweisen.

Auf der Wärmesenkenseite - also an der Absorptionseinheit - mit einem Plattenwärmetauscher ist die Spreizung der Temperatur begrenzt: Die erforderliche hohe Konzentrationsdifferenz zwischen armer und reicher Lösung lässt sich nur mit einem im Verhältnis zum Kältemitteldampf kleinen Massenstrom der armen Lösung realisieren. Die thermische Länge ist begrenzt, weil die arme Lösung im Absorber von oben nach unten strömen muss und keine Umlenkung möglich ist.

### Aufgabe

Der Erfindung liegt die Aufgabe zugrunde, die Temperaturspreizung des in die Absorptionseinheit ein- und aus dieser ausströmenden Wärmeträgers zu erhöhen.

### Lösung

Ausgehend von der bekannten Sorptionswärmepumpe wird nach der Erfindung vorgeschlagen, einen ersten Absorber, einen Druckminderer und einen zweiten Absorber in der Absorptionseinheit, wobei die arme Lösung in dem ersten Absorber auf einem ersten Druckniveau einen ersten Teilstrom des Kältemittels absorbiert, der Druckminderer einen zweiten Teilstrom des Kältemittels auf ein zweites Druckniveau drosselt und die aus dem ersten Absorber ausströmende arme Lösung anschließend in dem zweiten Absorber den zweiten Teilstrom absorbiert. In jedem Absorber ist der Druck der ausströmenden, mit dem Kältemittel angereicherten Lösung gegenüber der einströmenden armen Lösung vermindert. So kann jeweils genau die Menge an Kältemittel zugeführt werden, die die arme Lösung dort absorbieren kann. Die Teilströme weisen in Reihenfolge der Absorption durch das Kältemittel absteigende Drücke auf. Die erfindungsgemäße Sorptionswärmepumpe erfordert keine zusätzliche Pumpleistung für die arme bzw. schon angereicherte Lösung zwischen den Absorbern

Zudem kann die arme Lösung zwischen zwei Absorbern umgelenkt werden, um die Baugröße zu begrenzen.

Vorzugsweise sind in einer erfindungsgemäßen Sorptionswärmepumpe die Absorber Plattenwärmetauscher. Solche Absorber sind technisch einfach, wartungsarm und stehen kostengünstig in einer Vielzahl von Ausführungen am Markt zur Verfügung.

Vorzugsweise weist eine erfindungsgemäße Sorptionswärmepumpe mindestens einen Sensor auf, wobei jeder mindestens eine Sensor einen Pegel der armen Lösung in einer Zuleitung in genau einen der Absorber misst und einen Regler, der den Pegel mittels des diesem Absorber zugeordneten Druckminderers steuert. Die Absorption des Kältemittels in einem Absorber der erfindungsgemäßen Sorptionswärmepumpe wird maximiert, wenn sich ein Pegel der flüssigen armen Lösung - also eine Grenzfläche zum gasförmigen Kältemittel - in der Zuleitung zum nachfolgenden Absorber ausbildet. Die Lage des Pegels lässt sich über den Druck des dem nachfolgenden Absorber zugeführten Kältemitteldampfs steuern.

Alternativ können die Einströmdrücke der armen Lösung und des Kältemitteldampfs in einen Absorber gemessen und mittels des Druckminderers in ein Gleichgewicht gebracht werden.

Vorzugsweise weist eine erfindungsgemäße Sorptionswärmepumpe ein Drosselventil auf, das die reiche Lösung nach Austritt aus der Absorptionseinheit vom Hochdruck auf den Niederdruck entspannt, und eine Pumpe, die die arme Lösung nach Austritt aus dem Austreiber auf den Hochdruck und in die Absorptionseinheit pumpt. Eine solche erfindungsgemäße Sorptionswärmepumpe nimmt Wärme auf einem niedrigen Temperaturniveau auf und gibt sie auf einem höheren Niveau wieder ab. Die reiche Lösung kühlt im Drosselventil ab und kann so die Niedertemperaturwärme aufnehmen. Das gasförmige Kältemittel und das flüssige Lösungsmittel werden getrennt dem Absorber zugeführt. Pumpen sind allgemein bekannte Vorrichtungen in der Kältetechnik und stehen in einer Vielzahl von Ausführungen preisgünstig zur Verfügung.

Vorzugsweise weist eine solche erfindungsgemäße Sorptionswärmepumpe einen Verdichter auf, der das Kältemittel nach Austritt aus dem Austreiber verdichtet. Die erfindungsgemäße Sorptionswärmepumpe stellt dann insbesondere Heizwärme für Gebäude bereit.

Alternativ vorzugsweise weist eine solche erfindungsgemäße Sorptionswärmemaschine einen Verflüssiger auf, der das Kältemittel nach Austritt aus dem Austreiber verflüssigt, einen Verdampfer, der von außen zugeführte Wärme aufnimmt und das flüssige Kältemittel verdampft und eine Kältemittelpumpe, die das flüssige Kältemittel von dem Verflüssiger zu dem Verdampfer pumpt. Die erfindungsgemäße Sorptionswärmepumpe stellt dann als Wärmetransformator Prozesswärme auf einem hohen Temperaturniveau bereit.

Alternativ vorzugsweise weist eine erfindungsgemäße Sorptionswärmemaschine eine Lösungspumpe auf, die die reiche Lösung nach Austritt aus der Absorptionseinheit in den Austreiber pumpt, ein Entspannungsventil, das die arme Lösung nach Austritt aus dem Austreiber zum Eintritt in die Absorptionseinheit entspannt, einen Kondensator, in dem das Kältemittel aus dem Austreiber Wärme abgibt und kondensiert, einen Verdampfer, in dem das Kältemittel vor Eintritt in die Absorptionseinheit Wärme aufnimmt und ein Expansionsventil, das das flüssige Kältemittel nach Austritt aus dem Kondensator zum Eintritt in den Verdampfer expandiert. Die erfindungsgemäße Sorptionswärmepumpe stellt dann Kälte bereit.

Vorzugsweise ist in einer erfindungsgemäßen Sorptionswärmepumpe das Lösungsmittel Wasser und das Kältemittel Ammoniak. Wasser und Ammoniak sind natürliche Stoffe und haben sich in der Kältetechnik bewährt.

Ausgehend von dem bekannten Sorptionskreisprozess wird nach der Erfindung vorgeschlagen, dass die arme Lösung auf einem ersten Druckniveau einen ersten Teilstrom des Kältemittels absorbiert, ein zweiter Teilstrom des Kältemittels auf ein zweites Druckniveau gedrosselt wird und die arme Lösung anschließend den zweiten Teilstrom absorbiert. Ein solcher Prozess wird mit einer erfindungsgemäßen Sorptionswärmepumpe ausgeführt und zeichnet sich gleichermaßen durch deren Vorteile aus.

Vorzugsweise weist in einem erfindungsgemäßen Sorptionskreisprozess jeder Teilstrom einen Druck oberhalb eines Einströmdrucks der jeweils absorbierenden armen Lösung auf. In einem solchen erfindungsgemäßen Sorptionskreisprozess kann die Lösung über eine Verteillanze auf die Platten eines Plattenwärmetauschers aufgeteilt werden.

### Ausführungsbeispiele

Die Erfindung wird nachfolgend anhand von Ausführungsbeispielen erläutert. Es zeigen
- Fig. 1a: eine erste erfindungsgemäße Sorptionswärmepumpe und
- Fig. 1b: die Absorptionseinheit der ersten Sorptionswärmepumpe,
- Fig. 2: eine zweite erfindungsgemäße Sorptionswärmepumpe und
- Fig. 3: eine dritte erfindungsgemäße Sorptionswärmepumpe.

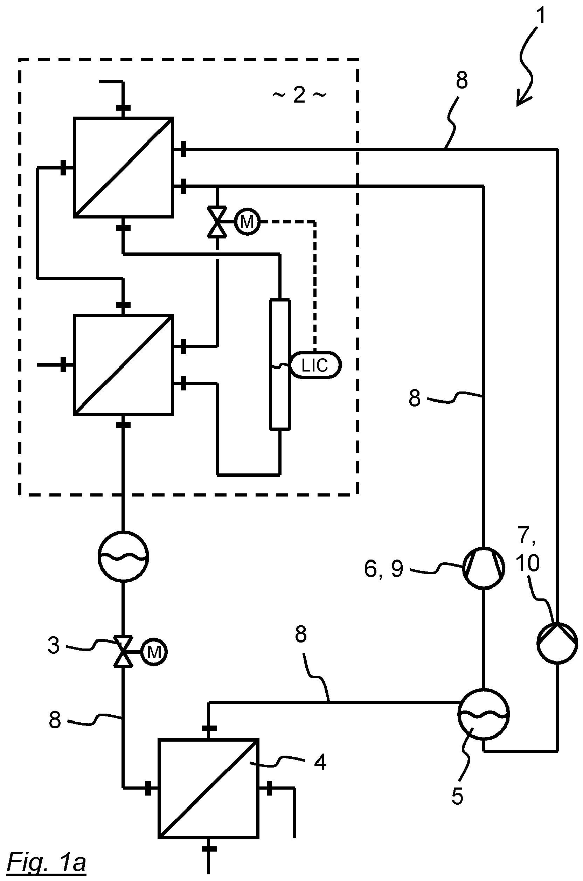

Die in Figur 1a gezeigte erste erfindungsgemäße Sorptionswärmepumpe 1 weist eine Absorptionseinheit 2, ein Drosselventil 3, einen Austreiber 4, einen Abscheider 5, einen Verdichter 6, eine Pumpe 7 sowie Rohrleitungen 8 auf, die die vorgenannten in dieser Reihenfolge zu einem kreisförmig geschlossenen System verbinden, wobei der Verdichter 6 in einem Kältemittelzweig 9 und die Pumpe 7 in einem dazu parallel verlaufenden Lösungsmittelzweig 10 vom Abscheider 5 zur Absorptionseinheit 2 angeordnet ist.

In einem Zyklus eines erfindungsgemäßen Sorptionskreisprozesses mit Ammoniak (NH₃) als Kältemittel in Wasser als Lösungsmittel absorbiert in der Absorptionseinheit 2 ein Strom der armen Lösung einen Strom des Kältemittels und gibt an ein Heizmedium Heizleistung ab. Die mit 95 °C unter einem Druck von 32,5 *bar* aus der Absorptionseinheit 2 austretende reiche Lösung wird durch das Drosselventil 3 auf den Niederdruck von 8 *bar* entspannt und auf eine Temperatur von 45 °*C* abgekühlt und im Austreiber 4 mittels einer Wärmequelle auf 88 °*C* erhitzt. Die Wärmequelle wird hierbei von 90 °*C* auf 50 °*C* abgekühlt. Aus dem nachfolgenden Abscheider 5 wird die arme Lösung durch die Pumpe 7 und das gasförmige Kältemittel durch den Verdichter 6 auf den Hochdruck von 33,1 *bar* und in die Absorptionseinheit 2 gefördert.

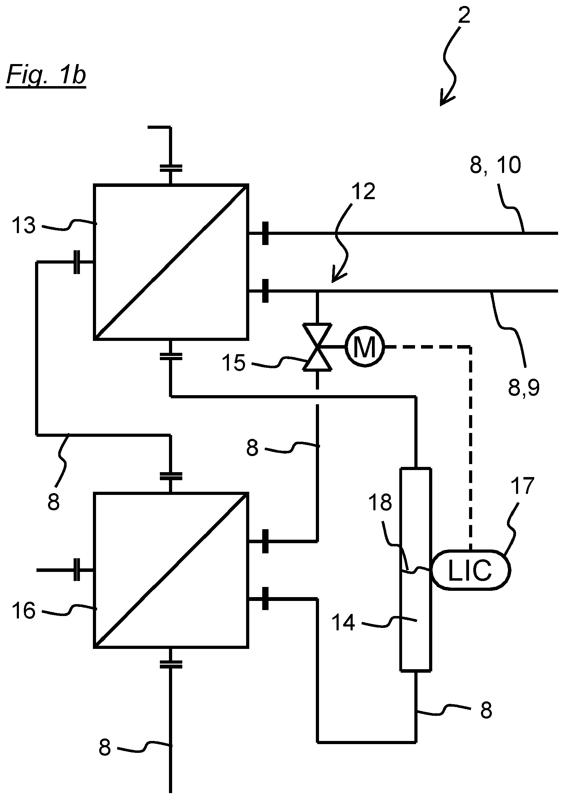

In der in Figur 1b im Detail gezeigten Absorptionseinheit 2 wird der Kältemittelstrom aus dem Verdichter 6 zunächst in einem Stromteiler 12 geteilt: Ein erster Teilstrom des Kältemittels wird mit der armen Lösung in einen ersten Absorber 13 geführt. Nach Eintritt der armen Lösung und des ersten Teilstroms des Kältemittels stellt sich in dem ersten Absorber 13 ein Druck von 33 *bar* ein.

Die im ersten Absorber 13 mit dem Kältemittel angereicherte Lösung wird über eine Zuleitung 14 und das verbleibende Kältemittel von dem Stromteiler 12 über einen Druckminderer 15 in einen zweiten Absorber 16 geführt. Die angereicherte Lösung weist in der Zuleitung 14 einen Druck von 32,8 *bar* auf, Der zweite Teilstrom des Kältemittels wird mittels des Druckminderers 15 auf 32,7 *bar* gedrosselt. Nach Eintritt der angereicherten Lösung und des zweiten Teilstroms des Kältemittels stellt sich in dem zweiten Absorber 16 ein Druck von 32,7 *bar* ein.

Der erste Absorber 13 und der zweite Absorber 16 sind Plattenwärmetauscher, die arme bzw. angereicherte Lösung wird durch Verteillanzen von oben auf die Platten verteilt und strömt auf diesen nach unten, der Kältemitteldampf strömt parallel von oben nach unten an den Platten entlang und wird von der Lösung absorbiert. Verteillanzen und Platten sind nicht dargestellt.

In der Zuleitung 14 wird kontinuierlich mittels eines Sensors 17 ein Pegel 18 der armen Lösung gemessen und der Druck des zweiten Teilstroms des Kältemittels über den Druckminderer 15 derart gesteuert, dass der Pegel 18 sich innerhalb der Zuleitung 14 befindet.

Ein flüssiges Heizmedium strömt mit einer Temperatur von 90 °*C* in den zweiten Absorber 16 und verlässt den ersten Absorber 13 mit einer Temperatur von 140 °*C*.

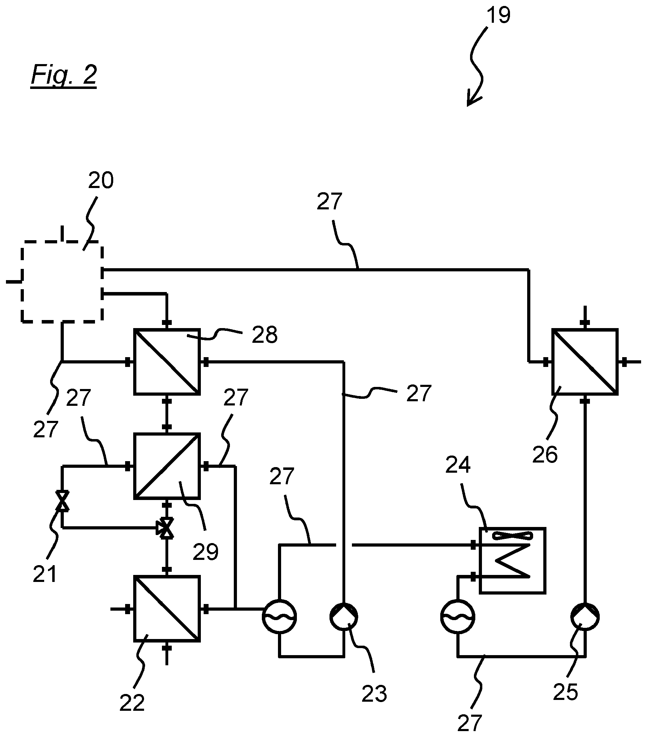

Die in Figur 2 gezeigte zweite erfindungsgemäße Sorptionswärmepumpe 19 nimmt als Wärmetransformator mit Ammoniak (NH₃) als Kältemittel in Wasser als Lösungsmittel Abwärme auf einem niedrigen Temperaturniveau auf und stellt Prozesswärme auf einem höheren Niveau bereit. Sie weist eine Absorptionseinheit 20, ein Drosselventil 21, einen Austreiber 22, eine Lösungsmittelpumpe 23, einen Verflüssiger 24, eine Kältemittelpumpe 25 und einen Verdampfer 26 sowie Rohrleitungen 27 auf, die die vorgenannten in dieser Reihenfolge zu einem kreisförmig geschlossenen System verbinden, wobei aus dem Austreiber 22 das Lösungsmittel mittels der Lösungsmittelpumpe 23 und das Kältemittel parallel über den Verflüssiger 24, die Kältemittelpumpe 25 und den Verdampfer 26 in den Absorber geführt wird.

Nach Austritt aus dem Absorber gibt die reiche Lösung zunächst in einem Lösungswärmeübertrager 28 an das in Absorber strömende Lösungsmittel und anschließend in einem weiteren Austreiber 29 an einen Teilstrom der aus dem Austreiber ausströmenden reichen Lösung Wärme ab. Die Absorptionseinheit 20 der zweiten Sorptionswärmepumpe 19 entspricht der Absorptionseinheit 2 der ersten Sorptionswärmepumpe 1.

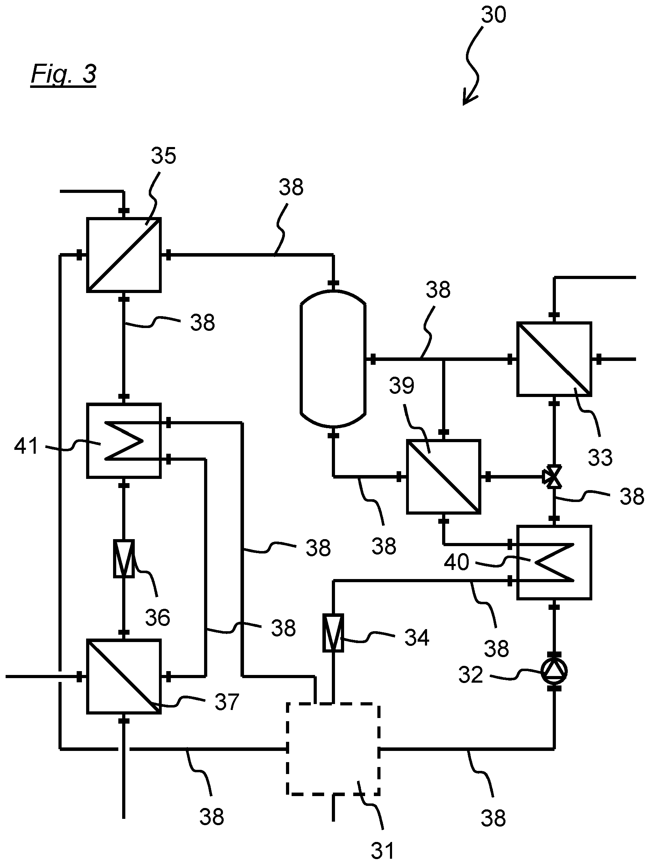

Die in Figur 3 gezeigte dritte erfindungsgemäße Sorptionswärmepumpe 30 nimmt als Kältemaschine mit Ammoniak (NH₃) als Kältemittel in Wasser als Lösungsmittel Wärme auf einem niedrigen Temperatur auf und gibt sie als Abwärme an die Umgebung ab. Sie weist eine Absorptionseinheit 31, eine Lösungspumpe 32, einen Austreiber 33, ein Entspannungsventil 34, einen Kondensator 35, ein Expansionsventil 36 und einen Verdampfer 37 sowie Rohrleitungen 38 auf, die die vorgenannten in dieser Reihenfolge zu einem kreisförmig geschlossenen System verbinden, wobei aus dem Austreiber 33 die arme Lösung über das Entspannungsventil 34 und parallel das Kältemittel über den Kondensator 35, das Expansionsventil 36 und den Verdampfer 37 in den Absorber geführt wird.

Nach Austritt aus dem Austreiber 33 gibt die arme Lösung zunächst in einem weiteren Austreiber 39 an einen an dem Austreiber 33 vorbei geführten Teilstrom der reichen Lösung und anschließend in einem Lösungswärmeübertrager 40 an die aus der Lösungspumpe 32 strömende reiche Lösung Wärme ab. Der aus dem Verdampfer 37 strömende Kältemitteldampf nimmt in einem Kältewärmeübertrager 41 aus dem flüssigen Kältemittel zwischen Kondensator 35 und Expansionsventil 36 Wärme auf. Die Absorptionseinheit 31 der dritten Sorptionswärmepumpe 30 entspricht der Absorptionseinheit 2 der ersten Sorptionswärmepumpe 1.

In den Figuren sind
- 1: Sorptionswärmepumpe
- 2: Absorptionseinheit
- 3: Drosselventil
- 4: Austreiber
- 5: Abscheider
- 6: Verdichter
- 7: Pumpe
- 8: Rohrleitung
- 9: Kältemittelzweig
- 10: Lösungsmittelzweig
- 11: Lösungssammler
- 12: Stromteiler
- 13: Absorber
- 14: Zuleitung
- 15: Druckminderer
- 16: Absorber
- 17: Drucksensor
- 18: Pegel
- 19: Sorptionswärmepumpe
- 20: Absorptionseinheit
- 21: Drosselventil
- 22: Austreiber
- 23: Lösungsmittelpumpe
- 24: Verflüssiger
- 25: Kältemittelpumpe
- 26: Verdampfer
- 27: Rohrleitung
- 28: Lösungswärmeübertrager
- 29: Austreiber
- 30: Sorptionswärmepume
- 31: Absorptionseinheit
- 32: Lösungspumpe
- 33: Austreiber
- 34: Entspannungsventil
- 35: Kondensator
- 36: Expansionsventil
- 37: Verdampfer
- 38: Rohrleitung
- 39: Austreiber
- 40: Lösungswärmeübertrager
- 41: Kältewärmeübertrager

## Patentansprüche

1. Sorptionswärmepumpe (1, 19, 30) mit gasförmigem Kältemittel und flüssigem Lösungsmittel, einer armen und einer reichen Lösung, wobei die arme und die reiche Lösung einphasige Mischungen des Lösungsmittels und des Kältemittels sind, sowie mit einer Absorptionseinheit (2, 20, 31), in der die arme Lösung das Kältemittel absorbiert und dabei Wärme abgibt und einem Austreiber (4, 22, 33), in dem die reiche Lösung von außen zugeführte Wärme aufnimmt und dabei das Kältemittel austreibt, ***gekennzeichnet durch*** einen ersten Absorber (13), einen Druckminderer (15) und einen zweiten Absorber (16) in der Absorptionseinheit (2, 20, 31), wobei die arme Lösung in dem ersten Absorber (13) auf einem ersten Druckniveau einen ersten Teilstrom des Kältemittels absorbiert, der Druckminderer (15) einen zweiten Teilstrom des Kältemittels auf ein zweites Druckniveau drosselt und die aus dem ersten Absorber (13) ausströmende arme Lösung anschließend in dem zweiten Absorber (16) den zweiten Teilstrom absorbiert.

2. Sorptionswärmepumpe (1, 19, 30) nach einem der vorgenannten Ansprüche, ***dadurch gekennzeichnet, dass*** die Absorber (13, 16) Plattenwärmetauscher sind.

3. Sorptionswärmepumpe (1, 19, 30) nach dem vorgenannten Anspruch, ***gekennzeichnet durch*** mindestens einen Sensor (17), wobei jeder mindestens eine Sensor (17) einen Pegel (18) der armen Lösung in einer Zuleitung (14) in genau einen der Absorber (16) misst und einen Regler, der den Pegel (18) mittels des diesem Absorber (16) zugeordneten Druckminderers (15) steuert.

4. Sorptionswärmepumpe (1, 19, 30) nach einem der vorgenannten Ansprüche, ***gekennzeichnet durch*** ein Drosselventil (3, 21), das die reiche Lösung nach Austritt aus der Absorptionseinheit (2, 20, 31) zum Eintritt in den Austreiber (4, 22, 33) entspannt, und eine Pumpe (7), die die arme Lösung nach Austritt aus dem Austreiber (4, 22, 33) in die Absorptionseinheit (2, 20, 31) pumpt.

5. Sorptionswärmepumpe (1) nach dem vorgenannten Anspruch, ***gekennzeichnet durch*** einen Verdichter (6), der das Kältemittel nach Austritt aus dem Austreiber (4) verdichtet.

6. Sorptionswärmepumpe (19) nach Anspruch 4, ***gekennzeichnet durch*** einen Verflüssiger (24), der das Kältemittel nach Austritt aus dem Austreiber (22) verflüssigt, einen Verdampfer (26), der von außen zugeführte Wärme aufnimmt und das flüssige Kältemittel verdampft und eine Kältemittelpumpe (25), die das flüssige Kältemittel von dem Verflüssiger (24) zu dem Verdampfer (26) pumpt.

7. Sorptionswärmepumpe (30) nach einem der Ansprüche 1 bis 3, ***gekennzeichnet durch*** eine Lösungspumpe (32), die die reiche Lösung nach Austritt aus der Absorptionseinheit (31) in den Austreiber (33) pumpt, ein Entspannungsventil (34), das die arme Lösung nach Austritt aus dem Austreiber (33) zum Eintritt in die Absorptionseinheit (31) entspannt, einen Kondensator (35), in dem das Kältemittel aus dem Austreiber (33) Wärme abgibt und kondensiert, einen Verdampfer (37), in dem das Kältemittel vor Eintritt in die Absorptionseinheit (31) Wärme aufnimmt und ein Expansionsventil (36), das das flüssige Kältemittel nach Austritt aus dem Kondensator (35) zum Eintritt in den Verdampfer (37) expandiert.

8. Sorptionswärmepumpe (1, 19, 30) nach einem der vorgenannten Ansprüche, ***dadurch gekennzeichnet, dass*** das Lösungsmittel Wasser und das Kältemittel Ammoniak ist.

9. Sorptionskreisprozess mit gasförmigem Kältemittel und flüssigem Lösungsmittel, einer armen und einer reichen Lösung, wobei die arme und die reiche Lösung einphasige Mischungen des Lösungsmittels und des Kältemittels sind, und wobei die arme Lösung das Kältemittel absorbiert und dabei Wärme abgibt, ***dadurch gekennzeichnet, dass*** die arme Lösung auf einem ersten Druckniveau einen ersten Teilstrom des Kältemittels absorbiert, ein zweiter Teilstrom des Kältemittels auf ein zweites Druckniveau gedrosselt wird und die arme Lösung anschließend den zweiten Teilstrom absorbiert.

10. Sorptionskreisprozess nach dem vorgenannten Anspruch, ***dadurch gekennzeichnet, dass*** jeder Teilstrom einen Druck oberhalb eines Einströmdrucks der jeweils absorbierenden armen Lösung aufweist.
